(19) **Europäisches Patentamt**

**European Patent Office**

**Office européen des brevets**

(11) **EP 1 056 578 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(51) Int Cl.7: **B29C 33/04**, B29C 45/73,
B29C 41/46, B29C 41/04

(21) Anmeldenummer: **99911681.7**

(22) Anmeldetag: **18.02.1999**

(86) Internationale Anmeldenummer:
**PCT/EP99/01056**

(87) Internationale Veröffentlichungsnummer:
**WO 99/042269 (26.08.1999 Gazette 1999/34)**

(54) **INTERNE FLÜSSIGGASKÜHLUNG**

INTERNAL COOLING WITH LIQUID GAS

REFROIDISSEMENT INTERNE AVEC DU GAZ LIQUIDE

(84) Benannte Vertragsstaaten:
**AT BE CH DE DK ES FI FR GB IT LI LU NL PT SE**

(30) Priorität: **19.02.1998 EP 98102855**

(43) Veröffentlichungstag der Anmeldung:
**06.12.2000 Patentblatt 2000/49**

(73) Patentinhaber: **FOBOHA GmbH**
**D-77716 Haslach (DE)**

(72) Erfinder:
• **BODMER, Werner**
**D-77716 Haslach (DE)**
• **ARMBRUSTER, Rainer**
**D-77709 Wolfach (DE)**

• **BODMER, Udo**
**D-77716 Haslach (DE)**

(74) Vertreter: **Frei, Alexandra Sarah**
**Frei Patentanwaltsbüro**
**Postfach 768**
**8029 Zürich (CH)**

(56) Entgegenhaltungen:
**US-A- 3 740 180          US-A- 3 819 317**
**US-A- 4 517 139**

• **PATENT ABSTRACTS OF JAPAN vol. 005, no. 090 (M-073), 12. Juni 1981 & JP 56 037137 A (MINAMI KANAGATA KOSAKUSHO:KK), 10. April 1981**

**Beschreibung**

Die Erfindung bezieht sich auf ein Verfahren zur internen Kühlung eines drehbaren Gegenstandes mit flüssigem Gas und auf eine Vorrichtung zur Durchführung dieses Verfahrens gemäss den Oberbegriffen der unabhängigen Patentansprüche. Das Verfahren eignet sich insbesondere für die Kühlung von Formteilen in Spritzgiessmaschinen mit drehbaren Formen.

Auf vielen Gebieten der Technik besteht Bedarf nach einer internen Kühlung eines drehbaren Gegenstandes. Eine solche interne Kühlung wird bekanntermassen erzielt, indem eine Kühlflüssigkeit - bspw. Wasser - aus einem nichtdrehbaren, ortsfesten Gegenstand in den daran zumindest teilweise angrenzenden drehbaren Gegenstand eingebracht wird. Im drehbaren Gegenstand wird sie dann dem zu kühlenden Teil zugeleitet; von diesem nimmt sie Wärmeenergie auf und führt sie weg, wodurch ein Kühleffekt entsteht. Dabei kann der drehbare Gegenstand bspw. als Achse, der ortsfeste Gegenstand bspw. als Lager zur Aufnahme der Achse ausgestaltet sein.

Das Einbringen der Kühlflüssigkeit vom drehbaren Gegenstand in den ortsfesten Gegenstand geschieht üblicherweise axial, d. h. die Übergabestelle liegt auf der Rotationsachse. Eine solche Anordnung ist günstig, weil sich darin die Übergabestelle gegenüber dem ortsfesten Gegenstand nicht bewegt. Es gibt jedoch Fälle, in denen der drehbare Gegenstand axial nicht zugänglich ist.

In einigen Anwendungen ist es wünschenswert, statt mit einer gewöhnlichen Kühlflüssigkeit mit einem flüssigem Gas zu kühlen. Kühlverfahren mit flüssigem Gas sind an sich bekannt. Dabei wird ein flüssiges Gas dem zu kühlenden Teil zugeleitet, wobei es üblicherweise umso mehr komprimiert wird, je näher es sich beim zu kühlenden Teil befindet. Beim zu kühlenden Teil wird ein Verdampfen und eine Expansion des zunächst flüssigen, komprimierten Gases zugelassen; dabei wird dem zu kühlenden Teil die dazu benötigte Wärmeenergie entzogen, wodurch ein Kühleffekt entsteht. Das Gas wird dann in gasförmigem Aggregatszustand abgeführt.

Wenn ein solches flüssiges Gas von einem ortsfesten Gegenstand in einen drehbaren Gegenstand eigebracht werden sollte, ergeben sich besondere Probleme. Das flüssige Gas befindet sich unter Umständen - je nach chemischer Zusammensetzung, Temperatur und Druck - in einem speziellen, für die Kühlung zwar vorteilhaften, für die Handhabung jedoch äusserst heiklen Aggregatszustand. Auf jeden Fall muss eine Verdampfung und/oder Expansion des flüssigen Gases vermieden werden, weil dies zu einem Einfrieren der Übergabestelle führen würde. Wegen des speziellen Aggregatszustandes des flüssigen Gases müssen insbesondere Dichtungsprobleme an der Übergabestelle gelöst werden.

Es ist Aufgabe der Erfingung, ein Verfahren für die interne Kühlung eines drehbaren Gegenstandes mit flüssigem Gas anzugeben, welches die obigen Probleme löst. Weiter ist es Aufgabe der Erfindung, eine Vorrichtung, zur Durchführung dieses Verfahrens zu schaffen.

Die Aufgabe wird gelöst durch das erfindungsgemässe Verfahren und die erfindungsgemässe Vorrichtung, wie sie in den unabhängigen Patentansprüchen definiert sind.

Beim erfindungsgemässen Verfahren zur internen Kühlung eines drehbaren Gegenstandes wird flüssiges Gas aus mindestens einem Zuführkanal in einem ortsfesten Gegenstand in eine an einer Kontaktfläche zwischen dem ortsfesten Gegenstand und dem drehbaren Gegenstand befindliche kreisförmige Nut gepresst. Aus der kreisförmigen Nut wird das flüssige Gas in mindestens einen Kanal im drehbaren Gegenstand gepresst und mindestens einem zu kühlenden Teil zugeführt. Dort verdampft es unter Aufnahme von Verdampfungswärme und wird als gasförmiges Gas abgeführt.

Vorzugsweise wird dem flüssigen Gas in der Umgebung des zu kühlenden Teils eine grössere Querschnittfläche zum Durchfluss zur Verfügung gestellt wird als die Summe der Querschnittflächen des mindestens einen Kanals, wodurch das flüssige Gas unter Aufnahme von Wärmeenergie verdampft und expandiert. Das Volumen des Gases nach der Expansion kann bspw. das 600fache des Volumens vor der Expansion betragen.

Die totale Querschnittfläche, welche dem flüssigen Gas auf dem Weg vom ortsfesten Gegenstand zum zu kühlenden Teil zur Verfügung gestellt wird, wird vorzugsweise konstant gelassen oder verkleinert, so dass das flüssige Gas auf dem Weg zum zu kühlenden Teil nicht expandiert und eine optimale Kühlwirkung beim zu kühlenden Teil erreicht wird. Besonders vorteilhaft ist es, die totale Querschnittfläche, welche dem flüssigen Gas auf dem Weg vom ortsfesten Gegenstand zum zu kühlenden Teil zur Verfügung gestellt wird, mindestens einmal verkleinert wird, so dass das flüssige Gas komprimiert wird. Dies kann bspw. durch Verengugnen der Kanäle realisiert werden. Während der Zuführkanal im ortsfesten Gegenstand einen Durchmesser von einigen Millimetern haben kann, kann der letzte Abschnitt des Kanals im drehbaren Gegenstand einen Durchmesser von 0.5 mm oder weniger haben; es können sogar kapillare Dimensionen verwendet werden. Mit "totale Querschnittfläche" ist dabei gemeint: die Querschnittfläche des einen Kanals, falls nur ein Kanal vorhanden ist, bzw. die Summe der Querschnittflächen aller Kanäle, falls mehrere Kanäle vorhanden sind; die Querschnittflächen werden dabei immer senkrecht zur Flussrichtung des Gases gemessen.

Die erfindungsgemässe Vorrichtung zur Durchführung des Verfahrens weist einen ortsfesten Gegenstand, in welchem ein um eine Drehachse drehbarer Gegenstand drehbar gelagert ist, auf. Der ortsfeste Gegenstand weist mindestens einen Zuführkanal für flüssiges Gas auf. Der drehbare Gegenstand ist von einer kreisförmigen Nut umgeben, in welche der mindestens eine Zuführkanal mündet und deren Zentrum auf der Drehachse des drehbaren Gegenstandes liegt. Die kreisförmige Nut kann im drehbaren Gegenstand und/oder im ortsfesten Gegenstand eingearbeitet sein. Der drehbare Gegenstand weist mindestens einen Kanal für flüssiges Gas auf, welcher aus der kreisförmigen Nut in die Umgebung eines zu kühlenden Teils führt.

Die Umgebung des zu kühlenden Teils weist vorzugsweise eine grössere Querschnittfläche auf als die Summe der Querschnittflächen des mindestens einen Kanals im drehbaren Gegenstand, wobei diese Querschnittflächen im wesentlichen in derselben Ebene senkrecht zur Rotationsachse gemessen werden. Dadurch wird dem Gas genügend Volumen für eine Expansion zur Verfügung gestellt Die Umgebung des zu kühlenden Teils kann bspw. als mindestens eine Expansionskammer ausgebildet sein.

Die Querschnittfläche des Zuführkanals bzw., falls mehrere Zuführkanäle vorhanden sind, die Summe der Querschnittflächen der Zuführkanäle, ist vorzugsweise grösser als das Doppelte der Querschnittfläche der kreisförmigen Nut. Wenn diese Forderung erfüllt ist, ist gewährleistet, dass das flüssige Gas im Bereich der kreisförmigen Nut nicht verdampft und/oder expandiert. Verdampfen und/oder Expandieren könnte zur Folge haben, dass der Umgebung der kreisförmigen Nut übermässig viel Wärme entzogen und diese Umgebung unerwünschterweise einfrieren würde.

Das Doppelte der Querschnittfläche der kreisförmigen Nut ist vorzugsweise grösser als die Summe der Querschnittflächen des mindestens einen Kanals. Die Summe der Querschnittflächen des mindestens einen Zuführkanals zur kreisförmigen Nut hin bleibt vorzugsweise konstant oder nimmt ab. Die Summe der Querschnittflächen des mindestens einen Kanals zur zu kühlenden Stelle hin bleibt vorzugsweise konstant oder nimmt ab. Durch solche Massnahmen wird wiederum das flüssige Gas auf seinem Weg zur zu kühlenden Stelle komprimiert, so dass eine optimale Kühlwirkung erreicht wird.

Um das Auftreten von Wärmestaus zu verhindern bzw. um Wärmestaus zu bekämpfen, wird mit Vorteil an denjenigen Stellen, wo Wärmestau auftreten kann, poröser Stahl eingesetzt. Dieser speichert Kälte und nimmt bei Bedarf Wärmeenergie auf.

Das erfindungsgemässe Verfahren kann mit Vorteil zum Kühlen von Formteilen in Spritzgiessmaschinen mit drehbaren Formen angewendet werden. Solche drehbaren Formen bieten mannigfaltige Vorteile. Es besteht z. B. die Möglichkeit, zu verarbeitende Schmelze (bspw. Kunststoffschmelze) aus mehreren Einspritzstationen in die Form einzuspritzen. Damit können erstens gleichzeitig Formteile mit verschiedenen Geometrien, verschiedenen Farben oder aus verschiedenen Materialien hergestellt werden. Damit können zweitens auch Formteile aus mehreren Komponenten hergestellt werden (Mehrkomponentenverfahren), also Formteile, welche verschiedene Farben aufweisen oder aus mehreren Materialien bestehen (Montagespritzguss). Drehbare Fomen erlauben ausserdem den Einsatz von Zwischenstationen für verschiedene Optionen und kürzere Zykluszeiten. Das flüssige Gas kann kontinuierlich oder auch stossweise zugeführt werden, z. B. nur dann, wenn eine Kühlung innerhalb eines Spritzgiesszyklus nötig ist.

Mit dem erfindungsgmässen Verfahren bzw. der erfindungsgemässen Vorrichtung können nun die Zykluszeiten dank der äusserst effizienten Kühlung von soeben eingespritzten Formteilen jetzt noch massiv herabgesetzt werden. Die vorliegende Erfindung löst das Problem des Einführens des flüssigen Gases in die zeitweise rotierende Achse, auf welcher die Spritzgiessform aufgehängt ist.

Im folgenden wird die Erfindung anhand von Figuren detailliert beschrieben. Dabei zeigen schematisch:

Fig. 1     ein (p,T)-Zustandsdiagramm für $CO_2$,

Fig. 2     einen Längsschnitt durch eine beispielhafte Ausfährungsform einer erfindungsgemässen Vorrichtung, verwendet in einer Spritzgiessmaschine,

Fig. 3-5   ein Detail von verschiedenen Ausführungsformen der erfindungsgemässen Vorrichtung im Längsschnitt und

Fig. 6     einen Längsschnitt durch eine weitere beispielhafte Ausführungsform einer erfindungsgemässen Vorrichtung, verwendet in einer Spritzgiessmaschine.

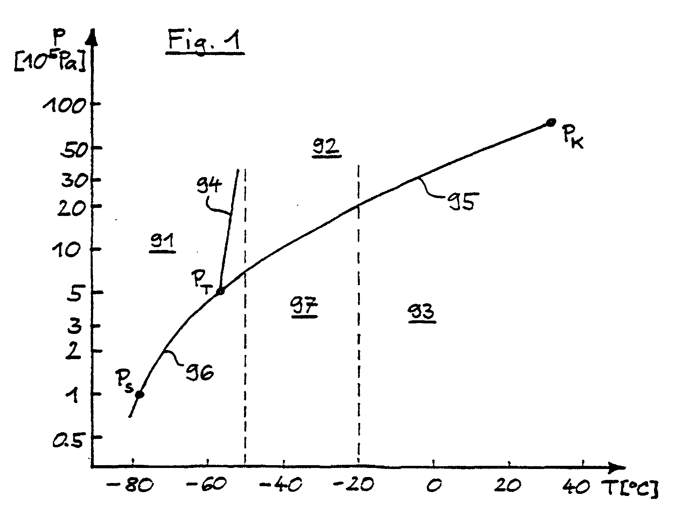

Als Kühlmedium wird beim erfindungsgemässen Verfahren bzw. in der erfindungsgemässen Vorrichtung vorzugsweise Kohlendioxid $CO_2$ benützt. **Figur 1** zeigt ein (p,T)-Zustandsdiagramm für $CO_2$, dessen Zahlenwerte aus Landolt-Börnstein, Zahlenwerte und Funktionen, IV. Band, 4. Teil, Springer-Verlag, 6. Auflage, 1967, S. 178-179 und 296, entnommen sind. In diesem Diagramm ist auf der waagrechten Achse linear die Temperatur T in °C und auf der senkrechten Achse logarithmisch der Druck p in $10^5$ Pa (was ungefähr einer Atmosphäre entspricht) aufgetragen. Es lassen sich ein Gebiet 91 der festen Phase, ein Gebiet 92 der flüssigen Phase und ein Gebiet 93 der gasförmigen Phase unterscheiden. Diese Gebiete 91-93 sind durch eine Schmelzdruckkurve 94, eine Dampfdruckkurve 95 bzw. eine Sublimationsdruckkurve 96 voneinander getrennt. Die Kurven 94-96 treffen sich in einem Tripelpunkt $P_T$. Weitere charakteristische Punkte im (p,T)-Diagramm sind ein kritischer Punkt $P_K$ und ein Sublimationspunkt $P_S$.

Das Kühlmedium $CO_2$ wird vorzugsweise in

komprimiertem flüssigem Zustand bei Temperaturen von -50 bis -20 °C (223 bis 253 K) zum zu kühlenden Teil geführt. Dieser Temperaturbereich 97 ist in Fig. 1 gestrichelt eingezeichnet. Der Verlauf der Dampfdruckkurve 95 in diesem Temperaturbereich 97 zeigt, dass hohe Drücke zwischen ca. $7 \cdot 10^5$ und $20 \cdot 10^5$ Pa nötig sind, um das $CO_2$ flüssig zu halten. Soll diese Forderung eingehalten werden, so darf sich der Querschnitt von Zuführkanälen auf dem Weg zum zu kühlenden Teil nicht wesentlich vergrössern. Es dürfen auch keine Undichtigkeiten auftreten; dies macht die Übergabe des Kühlmediums vom ortsfesten Gegenstand zum drehbaren Gegenstand besonders schwierig.

Ein weiteres für die Erfindung in Frage kommendes Kühlmedium ist Stickstoff ($N_2$).

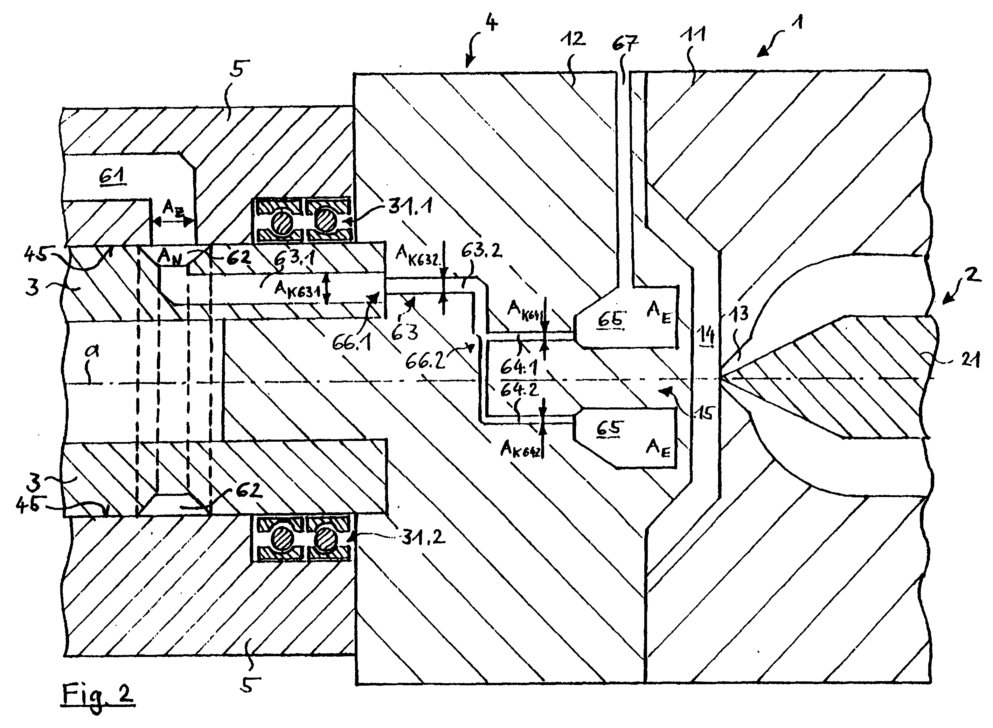

**Figur 2** zeigt einen schematischen Längsschnitt durch eine beispielhafte Ausführungsform einer erfindungsgemässen Vorrichtung. Die Vorrichtung ist in einer Spritzgiessmaschine mit einer um eine Rotationsachse a drehbaren Form 1 eingebaut. Davon ist schematisch bloss die Form 1, zusammengesetzt aus einer ersten Formhälfte 11 und einer zweiten Formhälfte 12, dargestellt. Die erste Formhälfte 11 weist einen Anschnitt 13 auf, durch welchen Kunststoffschmelze in eine formgebende Höhlung 14 zwischen der ersten Formhälfte 11 und der zweiten Formhälfte 12 einspritzbar ist. Von einer Einspritzdüse 2 ist nur ein Teil, bspw. ein Wärmeleittorpedo 21, dargestellt. Die zweite Formhälfte 12 ist auf einer Welle 3, bspw. einer Hohlwelle, montiert und bildet zusammen mit dieser einen drehbaren Gegenstand 4. Die Welle 3 ist, bspw. auf Kugellagern 31.1, 31.2, drehbar in einem ortsfesten Gegenstand 5 gelagert. Eine solche drehbare Spritzgiessform 1 bietet, wie eingangs erwähnt, viele Vorteile.

Es geht nun darum, einen nahe der formgebenden Höhlung 14 befindlichen Teil 15 der zweiten Formhälfte 12 und/oder die Kunststoffschmelze bzw. ein aus ihr durch Erstarren entstehendes und in der formgebenden Höhlung 14 befindliches Formteil effizient mit flüssigem Gas zu kühlen. Zu diesem Zweck ist der zu kühlende Teil 15 der zweiten Formhälfte 12 mit einer in diesem Ausführungsbeispiel kreisförmigen Expansionskammer 65 ausgestattet, in welcher zugeführtes flüssiges Gas verdampft und expandiert. Zwecks Zuführung des flüssigen Gases weist der ortsfeste Gegenstand 5 einen Zuführkanal 61 für flüssiges Gas auf. Der drehbare Gegenstand 4 ist von einer kreisförmigen Nut 62 umgeben, in welche der Zuführkanal 61 mündet. Die kreisförmige Nut befindet sich an einer Kontaktfläche 45 zwischen dem ortsfesten Gegenstand 5 und dem drehbaren Gegenstand 4; diese Kontaktfläche 45 entspricht der zylindrischen Aussenfläche der Welle 3. Die Übergabestelle zwischen dem Zuführkanal 61 und der kreisförmigen Nut 62 kann mit einer als Einstich ausgeführten (nicht dargestellten) Dichtung abgedichtet sein. Der drehbare Gegenstand 4 weist einen Kanal 63 aus bspw. zwei Kanalteilstücken 63.1, 63.2 für flüssiges Gas auf, welcher aus der kreisförmigen Nut 62 in die Expansionskammer 65 führt. Im Beispiel von Fig. 2 verzweigt sich der Kanal 63 in zwei oder auch mehrere Kanalzweige 64.1, 642. Die letzten Kanäle 64.1, 64.2 im drehbaren Gegenstand 4 haben typischerweise sehr kleine Durchmesser von 0.5 mm oder weniger.

Um eine Expansion des Gases am gewünschten Ort 15 zu erlauben, weist die Expansionskammer 65 eine viel grössere totale Querschnittfläche $2A_E$ auf als die Summe $A_{K641} + A_{K642}$ der Querschnittflächen der Kanalzweige 64.1, 64.2; die totale Querschnittfläche $2A_E$ der Expansionskammer 65 ist vorzugsweise einige Hundert Mal, bspw. 600mal, grösser als die Summe $A_{K641} + A_{K642}$ der Querschnittflächen der Kanalzweige 64.1, 64.2. Dabei werden diese Querschnittflächen $A_E$, $A_{K641}$, $A_{K642}$ im wesentlichen in einer zur jeweiligen Flussrichtung des Gases senkrechten Ebene gemessen. Stehen dem Gas zwei Wege zur Verfügung wie bspw. in der kreisförmigen Expansionskammer 65, so muss zur Berechung der totalen Querschnittfläche $2A_E$ die entsprechende Querschnittfläche $A_E$ doppelt gezählt werden.

Um hingegen ein Verdampfen und/oder eine Expansion des Gases auf dem Weg zur Expansionskammer 65 zu verhindern und das flüssige Gas zwecks Erreichen einer optimale Kühlwirkumg noch mehr zu komprimieren, sind Zuführkanal 61, kreisförmige Nut 62 und Kanäle 63.1, 63.2, 64.1, 64.2 wie folgt dimensioniert. Die Querschnittfläche $A_Z$ des Zuführkanals 61 (gemessen in einer zur Flussrichtung des flüssigen Gases senkrechten Ebene) ist grösser als das Doppelte $2A_N$ der Querschnittfläche AN der kreisförmigen Nut 62 (gemessen ebenfalls in einer zur Flussrichtung des flüssigen Gases senkrechten Ebene, d. h. in einer Ebene, welche die Rotationsachse a beinhaltet). Das Doppelte $2A_N$ der Querschnittfläche AN der kreisförmigen Nut 62 ist grösser als die Querschnittfläche $A_{K631}$ des ersten Kanalteilstücks 63.1. Die Querschnittfläche $A_Z$ des Zuführkanals 61 bleibt zur kreisförmigen Nut 62 hin konstant oder nimmt ab. Die Querschnittfläche $A_{K631}$, $A_{K632}$ des Kanals 63 bzw. die Summe $A_{K641} + A_{K642}$ der Querschnittflächen der Kanalzweige 64.1, 64.2 nimmt zur Expansionskammer 65 hin ab, bspw. an einer oder mehreren Verengungen 66.1, 66.2, vorzugsweise um je 5 bis 10 %.

Zusammenfassend gilt also für die in Fig. 1 eingezeichneten Querschnittflächen $A_Z$, $A_N$, $A_{K631}$, $A_{K632}$, $A_{K641}$, $A_{K642}$, $A_E$ die Ungleichheit

$$2A_E > A_Z \geq 2A_N \geq A_{K631} \geq A_{K632} \geq A_{K641} + A_{K642} ,$$

wobei der Faktor vor $A_E$ für das Beispiel einer kreisförmigen Expansionskammer 2 beträgt, für andere Geometrien jedoch auch einen anderen Wert, bspw. 1, annehmen kann.

Nach der Expansion des Gases in der Expansionskammer 65 wird das Gas in gasförmigem Zustand abgeführt. Zu diesem Zweck kann z. B. die zweite Formhälfte 12 im Bereich 15 der Expansionskammer 65 zumindest teilweise aus porösem Stahl gefertigt sein, und das Gas kann über die Poren abgeführt werden. Alternativ dazu kann die zweite Formhälfte 12 mit Evakuierungsbohrungen 67 versehen sein, über welche das Gas nach aussen oder in die formgebende Höhlung 14 abgeführt wird. Solche Evakuierungsbohrungen 67 können auch als Expansionsbohrungen mit grosser Querschnittfläche ausgeführt sein; ihre totale Querschnittfläche kann vorzugsweise einige Hundert Mal, bspw. 600mal, grösser sein als die Summe $A_{K641} + A_{K642}$ der Querschnittflächen der Kanalzweige 64.1, 64.2. Die Evakuierungsbohrungen 67 können bspw. durch Galvanisieren hergestellt werden. An der Oberfläche der zweiten Formhälfte 12 kann das abgeführte Gas entweder einfach in die Umgebungsatmosphäre entweichen. Es kann aber auch aufgefangen, verflüssigt, zu einem Tank zurückgeführt und erneut zur Kühlung gebraucht werden; mit einem solchen Recycling lassen sich ca. 70-95 % des Gases nach einem Kühlprozess wieder brauchen, was sehr wirtschaftlich ist.

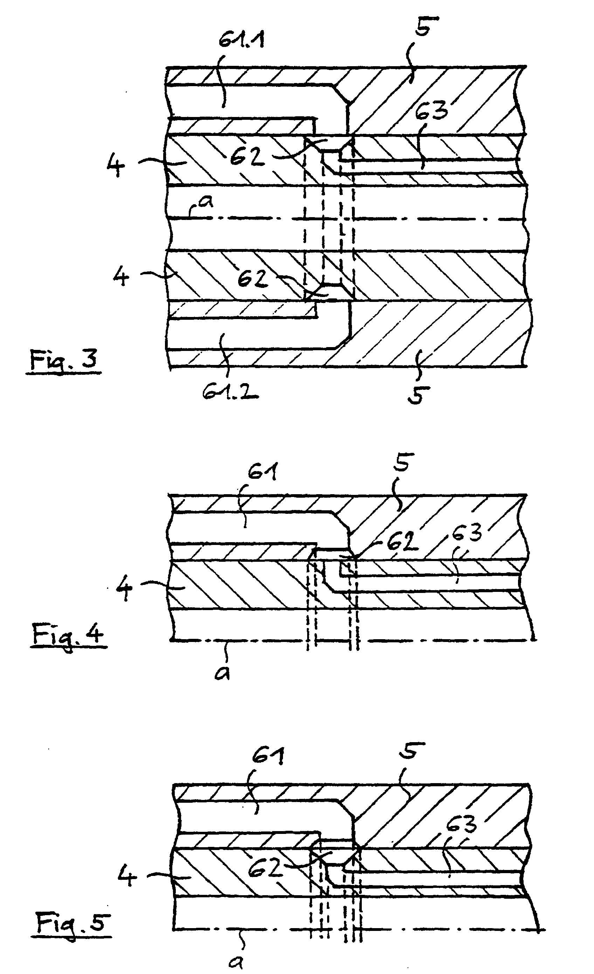

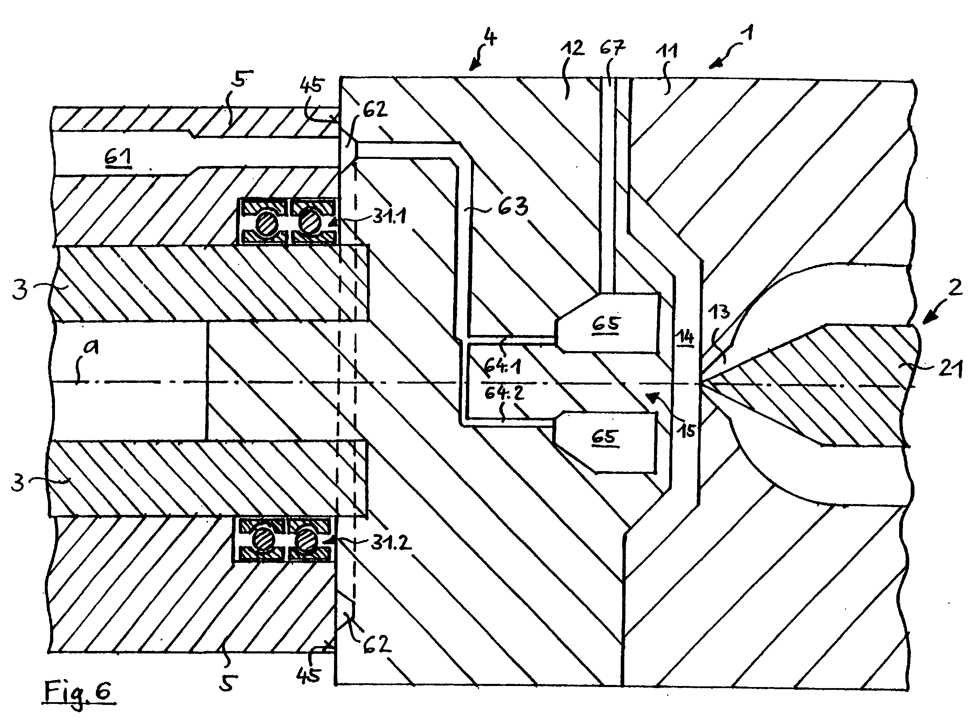

In den Figuren 3-5 ist ein Detail von verschiedenen Ausführungsformen der erfindungsgemässen Vorrichtung im Längsschnitt dargestellt, nämlich die kreisförmige Nut 62, ein Teil des Zuführkanals 61 im ortsfesten Gegenstand 5 und ein Teil des Kanals 63 im drehbaren Gegenstand 4. Der Einfachheit halber ist in den Figuren 3 und 4 nur eine Hälfte des Längsschnittes des drehbaren Gegenstandes 4 dargestellt. Im Ausführungsbeispiel von **Figur 3** ist die kreisförmige Nut 62 ebenfalls, wie in Fig. 2, im drehbaren Gegenstand 4 eingearbeitet. Figur 3 zeigt eine Variante mit mehreren, bspw. zwei, Zuführkanälen 61.1, 61.2. **Figur 4** zeigt ein Ausführungsbeispiel, in welchem die kreisförmige Nut 62 im ortsfesten Gegenstand 5 eingearbeitet ist. Bei **Figur 5** handelt es sich um eine Kombination der Figuren 3 und 4 insofern, als dass die kreisförmige Nut 62 sowohl im drehbaren Gegenstand 4 als auch im ortsfesten Gegenstand liegt 5.

In den Ausführungsbeispielen der Figuren 2-5 wurde das flüssige Gas jeweils radial nach innen, senkrecht zur Rotationsachse a in die kreisförmige Nut 63 - gepresst. Dies muss gemäss der Erfindung nicht notwendigerweise so sein. **Figur 6** zeigt eine (ansonsten zu Fig. 2 analoge) Ausführungsform der erfindungsgemässen Vorrichtung, in welcher das flüssige Gas parallel zur Rotationsachse a in eine kreisförmige Nut 62 gepresst wird. Die kreisförmige Nut 62 ist in diesem Beispiel in der zweiten Formhälfte 12 eingearbeitet. Die Kontaktfläche 45, in welcher sich die kreisförmige Nut 62 befindet, liegt in diesem Ausführungsbeispiel senkrecht zur Rotationsachse a. Andere Ausführungsformen sind denkbar, in denen das flüssige Gas sogar radial nach aussen oder in eine andere Richtung in die kreisförmige Nut 62 gepresst wird. Selbstverständlich gehören auch Kombinationen der in den Figuren 2-6 dargestellten Ausführungsformen zur Erfindung.

**Patentansprüche**

1. Verfahren zur internen Kühlung eines um eine Drehachse (a) drehbaren Gegenstandes (4) mit flüssigem Gas, welches aus einem ortsfesten Gegenstand (5) in den drehbaren Gegenstand (4) eingeführt wird, **dadurch gekennzeichnet, dass** das flüssige Gas aus mindestens einem Zuführkanal (61) im ortsfesten Gegenstand (5) in eine an einer Kontaktfläche (45) zwischen dem ortsfesten Gegenstand (5) und dem drehbaren Gegenstand (4) befindliche kreisförmige Nut (62) gepresst, aus der kreisförmigen Nut (62) in mindestens einen Kanal (63, 64.1, 64.2) im drehbaren Gegenstand (4) gepresst und mindestens einem zu kühlenden Teil (15) zugeführt wird, wo es unter Aufnahme von Verdampfungswärme verdampft und als gasförmiges Gas abgeführt wird.

2. Verfahren nach Anspruch 1, **dadurch gekennzeichnet, dass** dem flüssigen Gas in der Umgebung (65) des zu kühlenden Teils (15) eine grössere Querschnittfläche ($2A_E$) zum Durchfluss zur Verfügung gestellt wird als die Summe ($A_{K641} + A_{K642}$) der Querschnittflächen des mindestens einen Kanals (63, 64.1, 64.2), wodurch das flüssige Gas unter Aufnahme von Wärmeenergie verdampft und expandiert

3. Verfahren nach Anspruch 1 oder 2, **dadurch gekennzeichnet, dass** die totale Querschnittfläche, welche dem flüssigen Gas auf dem Weg vom ortsfesten Gegenstand (5) zum zu kühlenden Teil (15) zur Verfügung gestellt wird, konstant gelassen oder verkleinert wird, so dass das flüssige Gas nicht expandiert.

4. Verfahren nach einem der Ansprüche 1-3, **dadurch gekennzeichnet, dass** die totale Querschnittfläche, welche dem flüssigen Gas auf dem Weg vom ortsfesten Gegenstand (5) zum zu kühlenden Teil (15) zur Verfügung gestellt wird, mindestens einmal verkleinert wird, so dass das flüssige Gas komprimiert wird.

5. Verfahren nach einem der Ansprüche 1-4, **dadurch gekennzeichnet, dass** das flüssige Gas in Richtung der Drehachse (a) in die kreisförmige Nut (62) gepresst wird.

6. Verfahren nach einem der Ansprüche 1-5, **dadurch gekennzeichnet, dass** als Gas $CO_2$ oder Stickstoff verwendet wird.

7. Anwendung des Verfahrens nach einem der Ansprüche 1-6 zum Kühlen von Formteilen in Spritzgiessmaschinen mit drehbaren Formen (1).

8. Vorrichtung zur Durchführung des Verfahrens nach einem der Ansprüche 1-6, mit einem ortsfesten Gegenstand (5), welcher mindestens eine Kontaktfläche (45) mit einem um eine Drehaches (a) drehbaren Gegenstand (4) aufweist, **dadurch gekennzeichnet, dass** der ortsfeste Gegenstand (5) mindestens einen Zuführkanal (61) für flüssiges Gas aufweist, dass sich an der Kontaktfläche (45) zwischen dem ortsfesten Gegenstand (5) und dem drehbaren Gegenstand (4) eine kreisförmige Nut (62) befindet, in welche der mindestens eine Zuführkanal (61) mündet und deren Zentrum auf der Drehachse (a) des drehbaren Gegenstandes (4) liegt, und dass der drehbare Gegenstand (4) mindestens einen Kanal (63, 64.1, 64.2) für flüssiges Gas aufweist, welcher aus der kreisförmigen Nut (62) in die Umgebung (65) eines zu kühlenden Teils (15) führt.

9. Vorrichtung nach Anspruch 8, **dadurch gekennzeichnet, dass** die Umgebung (65) des zu kühlenden Teils (15) eine grössere Querschnittfläche ($A_E$) aufweist als die Summe ($A_{K641} + A_{K642}$) der Querschnittflächen des mindestens einen Kanals (63, 64.1, 64.2).

10. Vorrichtung nach Anspruch 9, **dadurch gekennzeichnet, dass** die Umgebung (65) des zu kühlenden Teils (15) als mindestens eine Expansionskammer ausgebildet ist.

11. Vorrichtung nach einem der Ansprüche 8-10, **dadurch gekennzeichnet, dass** die Summe der Querschnittflächen ($A_Z$) des mindestens einen Zuführkanals (61) grösser ist als das Doppelte ($2A_N$) der Querschnittfläche der kreisförmigen Nut (62).

12. Vorrichtung nach einem der Ansprüche 8-11, **dadurch gekennzeichnet, dass** das Doppelte ($2A_N$) der Querschnittfläche der kreisförmigen Nut (62) grösser ist als die Summe ($A_{K631}$) der Querschnittflächen des mindestens einen Kanals (63).

13. Vorrichtung nach einem der Ansprüche 8-12, **dadurch gekennzeichnet, dass** die Summe ($A_Z$) der Querschnittflächen des mindestens einen Zuführkanals (61) zur kreisförmigen Nut (62) hin konstant bleibt oder abnimmt.

14. Vorrichtung nach einem der Ansprüche 8-13, **dadurch gekennzeichnet, dass** die Summe der Querschnittflächen ($A_{K631}$) des mindestens einen Kanals (63) zum zu kühlenden Teil (15) hin konstant bleibt oder abnimmt.

15. Vorrichtung nach einem der Ansprüche 8-14, **dadurch gekennzeichnet, dass** die kreisförmige Nut (62) im drehbaren Gegenstand (4) und/oder im ortsfesten Gegenstand (5) eingearbeitet ist.

**Claims**

1. Method for internal cooling of an object (4) rotating around a rotation axis (a) with liquid gas, which from a fixed object (5) is introduced into the rotating object (4), **characterized in that** the liquid gas is pressed from at least one inlet channel (61) in the fixed object (5) into a ring-shaped groove (62) located on a contact surface (45) between the fixed object (5) and the rotating object (4), pressed from the ring-shaped groove (62) into at least one channel (63, 64.1, 64.2) in the rotating object (4) and delivered to at least one part to be cooled (15), where it evaporates while absorbing vaporization heat, and is removed in the form of gaseous gas.

2. Method in accordance with claim 1, **characterized in that** a greater cross-sectional surface area ($A_E$) is made available to the liquid gas in an area (65) surrounding the part to be cooled (15) than the sum ($A_{K641} + A_{K642}$) of the cross-sectional surface areas of the at least one channel (63, 64.1, 64.2), as a result of which the liquid gas expands and evaporates while absorbing vaporization heat and expands.

3. Method in accordance with claim 1 or 2, **characterized in that** the total cross-sectional surface area, which is made available to the liquid gas on its path from the fixed object (5) to the part to be cooled (15), is left constant or reduced, so that the liquid gas does not expand.

4. Method in accordance with one of the claims 1-3, **characterized in that** the total cross-sectional surface area, which is made available to the liquid gas on its path from the fixed object (5) to the part to be cooled (15) is reduced at least once, so that the liquid gas is compressed.

5. Method in accordance with one of the claims 1-4, **characterized in that** the liquid gas is pressed into the ring-shaped groove (62) in the direction of the rotation axis (a).

6. Method in accordance with one of the claims 1-5, **characterized in that** $CO_2$ or nitrogen is used as gas.

7. Application of the method in accordance with one of the claims 1-6 for cooling moulded parts in injection moulding machines with rotating moulds (1).

8. Device for the implementation of the method in accordance with one of the claims 1-6, with a fixed object (5), which has at least one contact surface (45) with an object (4) rotating around a rotation axis (a), **characterized in that** the fixed object (5) has at least one inlet channel (61) for liquid gas, that at the contact surface (45) between the fixed object (5) and the rotating object (4) there is a ring-shaped groove (62), into which the at least one inlet channel (61) merges and the centre of which is on the rotation axis (a) of the rotating object (4), and that the rotating object (4) has at least one channel (63, 64.1, 64.2) for liquid gas, which leads from the ring-shaped groove (62) into the surrounding area (65) of a part to be cooled (15).

9. Device in accordance with claim 8, **characterized in that** the surrounding area (65) of the part to be cooled (15) has a greater cross-sectional surface area ($A_E$) than the sum ($A_{K641} + A_{K642}$) of the cross-sectional surface areas of the at least one channel (63, 64.1, 64.2).

10. Device in accordance with claim 9, **characterized in that** the surrounding area (65) of the part to be cooled (15) is designed as at least one expansion chamber.

11. Device in accordance with one of the claims 8-10, **characterized in that** the sum of the cross-sectional surface areas ($A_Z$) of the at least one inlet channel (61) is greater than double ($2A_N$) the cross-sectional surface area of the ring-shaped groove (62).

12. Device in accordance with one of the claims 8-11, **characterized in that** the double ($2A_N$) of the surface area of the ring-shaped groove (62) is greater than the sum ($A_{K631}$) of the cross-sectional surface areas of the at least one channel (63).

13. Device in accordance with one of the claims 8-12, **characterized in that** the sum ($A_Z$) of the cross-sectional surface areas of the at least one inlet channel (61) to the ring-shaped groove (61) remains constant or reduces.

14. Device in accordance with one of the claims 8-13, **characterized in that** the sum of the cross-sectional surface areas ($A_{K631}$) of the at least one channel (63) towards the part to be cooled (15) remains constant or reduces.

15. Device in accordance with one of the claims 8-14, **characterized in that** the ring-shaped groove (62) is machined into the rotating object (4) and/or into the fixed object (5).

**Revendications**

1. Procédé pour le refroidissement interne d'un objet (4) apte à tourner autour d'un axe de rotation (a), à l'aide d'un gaz liquéfié qui est apporté depuis un objet fixe (5) jusque dans l'objet rotatif (4), **caractérisé en ce que** le gaz liquéfié provenant d'au moins un canal d'amenée (61) dans l'objet fixe (5) est comprimé dans une rainure circulaire (62) ménagée sur une surface de contact (45) située entre l'objet fixe (5) et l'objet rotatif (4), est amené depuis la rainure circulaire (62) et comprimé jusque dans au moins un canal (63, 64.1, 64.2) ménagé dans l'objet rotatif (4) et à au moins une partie (15) à refroidir où il est vaporisé en reprenant la chaleur de vaporisation et d'où il est évacué sous la forme de gaz gazeux.

2. Procédé selon la revendication 1, **caractérisé en ce que** dans l'environnement (65) de la partie à refroidir (15), le gaz liquéfié dispose d'une section transversale ($2A_E$) de passage plus grande que la somme ($A_{K641} + A_{K642}$) des sections transversales du canal (63, 64.1, 64.2) au moins présent, grâce à quoi le gaz liquide se vaporise et se détend en recevant de l'énergie thermique.

3. Procédé selon la revendication 1 ou 2, **caractérisé en ce que** la section transversale totale dont dispose le gaz liquide sur son parcours entre l'objet fixe (5) et la partie (15) à refroidir est maintenue constante ou diminue de telle sorte que le gaz liquide ne se détende pas.

4. Procédé selon l'une des revendications 1 à 3, **caractérisé en ce que** la section transversale totale dont dispose le gaz liquide sur son parcours entre l'objet fixe (5) et la partie (15) à refroidir est diminuée au moins une fois de telle sorte que le gaz liquide est comprimé.

5. Procédé selon l'une des revendications 1 à 4, **caractérisé en ce que** dans la rainure circulaire (62), le gaz liquide est comprimé en direction de l'axe de rotation (a).

6. Procédé selon l'une des revendications 1 à 5, **caractérisé en ce que** l'on utilise comme gaz du $CO_2$ ou de l'azote.

7. Utilisation du procédé selon l'une des revendications 1 à 6 pour le refroidissement de pièces moulées dans des machines de moulage par injection à moule rotatif (1).

8. Dispositif en vue de la mise en oeuvre du procédé selon l'une des revendications 1 à 6, comprenant un objet fixe (5) qui présente au moins une surface de contact (45) avec un objet (4) apte à tourner autour d'un axe de rotation (a), **caractérisé en ce que** l'objet fixe (5) présente au moins un canal d'amenée (61) pour gaz liquéfié, **en ce que** sur la surface de contact (45) entre l'objet fixe (5) et l'objet rotatif (4) se trouve une rainure circulaire (62) dans laquelle débouche le canal d'amenée (61) au moins présent et dont le centre est situé sur l'axe de rotation (a) de l'objet rotatif (4), et **en ce que** l'objet rotatif (4) présente au moins un canal (63, 64.1, 64.2) pour gaz liquéfié, qui conduit depuis la rainure circulaire (62) jusque dans l'environnement (65) d'une partie (15) à refroidir.

9. Dispositif selon la revendication 8, **caractérisé en ce que** l'environnement (65) de la partie (15) à refroidir présente une section transversale ($A_E$) plus grande que la somme ($A_{K641} + A_{K642}$) des sections transversales du canal (63, 64.1, 64.2) au moins présent.

10. Dispositif selon la revendication 9, **caractérisé en ce que** l'environnement (65) de la partie (15) à refroidir est configuré comme au moins une chambre de détente.

11. Dispositif selon l'une des revendications 8 à 10, **caractérisé en ce que** la somme des sections transversales (Az) du canal d'amenée (61) au moins présent est plus grande que le double (2AN) de la section transversale de la rainure circulaire (62).

12. Dispositif selon l'une des revendications 8 à 11, **caractérisé en ce que** le double (2AN) de la section transversale de la rainure circulaire (62) est supérieur à la somme ($A_{K631}$) des sections transversales du canal (63) au moins présent.

13. Dispositif selon l'une des revendications 8 à 12, **caractérisé en ce que** la somme (Az) des sections transversales du canal d'amenée (61) au moins présent reste constante ou diminue en direction de la rainure circulaire (62).

14. Dispositif selon l'une des revendications 8 à 13, **caractérisé en ce que** la somme des sections transversales ($A_{K631}$) du canal (63) au moins présent reste constante ou diminue en direction de la partie (15) à refroidir.

15. Dispositif selon l'une des revendications 8-14, **caractérisé en ce que** la rainure circulaire (62) est ménagée dans l'objet rotatif (4) et/ou dans l'objet fixe (5) .

Fig. 1

Fig. 2

Fig. 3

Fig. 4

Fig. 5

Fig. 6